# EUROPÄISCHE PATENTSCHRIFT

(11) **EP 1 470 949 B1**
(45) Veröffentlichungstag und Bekanntmachung des Hinweises auf die Patenterteilung: **15.11.2006**
(21) Anmeldenummer: 04009048.2
(22) Anmeldetag: 16.04.2004
(51) Int. Cl.: B60N 2/00, B60N 2/02, B60N 2/12, B60N 2/20

(54) **Fahrzeugsitz, insbesondere Kraftfahrzeugsitz**
Vehicle seat, especially automotive vehicle seat.
Siège de véhicule, en particulier siège de véhicule automobile.

(30) Priorität: 25.04.2003 DE 10318717
(43) Veröffentlichungstag der Anmeldung: 27.10.2004
(73) Patentinhaber: KEIPER GmbH & Co. KG, 67657 Kaiserslautern (DE)
(72) Erfinder: Schüler, Rolf, 42579 Heiligenhaus (DE); Berres, Michael, 53639 Königswinter (DE)
(74) Vertreter: Patentanwälte Hosenthien-Held und Dr. Held

(56) Entgegenhaltungen:
- DE-A- 3 137 151
- DE-A- 4 442 841
- DE-A- 19 630 189
- DE-A- 19 725 365
- DE-C- 19 905 363
- DE-U- 20 016 770
- FR-A- 2 754 497

## Beschreibung

Die Erfindung betrifft einen Fahrzeugsitz mit den Merkmalen des Oberbegriffs des Anspruches 1.

Bei Fahrzeugsitzen ist es bekannt, dass für eine reine Längseinstellung unterhalb des Sitzteils ein schwenkbarer Auslösebügel und für ein mit einem Vorfahren des Sitzteils kombiniertes Freischwenken der Lehne an der Lehne ein schwenkbarer Auslösehebel angeordnet ist.

Die FR 2 754 497 A1 offenbart einen Fahrzeugsitz der eingangs genannten Art mit Sensoren im Sitzteil und in der Lehne, welche Belastungen und Entlastungen des Sitzteils und der Lehne seitens des Benutzers erfassen und eine Steuerung für Neigungseinstellungen derselben und für eine eine Längsverschiebung ansprechen. In der DE 200 16 770 U1 wird eine Einstellung eines vergleichbaren Fahrzeugsitzes beschrieben, bei welcher im Bereich der Sitzoberflächen vorgesehene Kontaktmatten als kombinierte Auslösemittel und Betätigungssensoren die Kräfte erfassen und entsprechend eine Neigungseinstellung der Lehne, eine Höheneinstellung des Sitzteils oder dergleichen auslösen.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Mit der Lehne als Auslösemittel sind keine gesonderten Bedienhebel an der Seite oder auf der Rückseite der Lehne erforderlich, was zum einen Kosten spart und zum anderen Schwächungen des Lehnenrahmens an der Durchtrittsstelle des Bedienhebels vermeidet. Außerdem ist der Bedienkomfort hoch, da die natürliche, intuitive Auslösung durch den Versuch einer Bewegung in die gewünschte Richtung gegeben ist. Vorzugsweise löst daher eine von einem Sensor erfasste Kraft auf die Lehne die Bewegung des Sitzteils aus, d.h. es erfolgt eine kraftgesteuerte Auslösung.

Es können mehrere miteinander verknüpfte Sensoren vorgesehen sein. Als Sensor kommen prinzipiell alle bekannten direkt oder indirekt krafterfassenden Vorrichtungen in Frage, beispielsweise Biegebalken mit indirekter optischer oder magnetischer Erfassung der Verformung, Biegebalken mit Dehnmeßstreifen oder piezoelektrische Sensoren.

Bei der erfindungsgemäßen Lösung ist der Sensor in einem Lager oder in der Umgebung eines Lagers zwischen zwei im Kraftfluss zwischen der Lehne und der Fahrzeugstruktur je einschließlich liegenden Bauteilen angeordnet, wobei das Lager ein Gelenk oder ein durch Ausübung einer Kraft auf die Lehne entstehendes Momentanlager sein kann. Beispielhaft kann der Sensor angeordnet sein in wenigstens einem Beschlag zur Anbringung der Lehne oder in der Umgebung des Beschlages, insbesondere an den Schnittstellen zum Sitzteil oder zur Lehne, d.h. in der Nähe der Lehnenschwenkachse, oder aber unter oder in der Sitzschiene, innerhalb einer eventuell vorhandenen Höheneinstellerkinematik, oder innerhalb der Lehne. Entsprechend braucht der kraftsensitive Sensor nicht sehr empfindlich sein, kann also kostengünstig sein, da aufgrund der Länge der als Hebel wirkenden Lehne ausreichend große Kräfte detektierbar sind.

Vorzugsweise sind an die Steuerung Abfragemittel angeschlossen, die zusätzliche Informationen, beispielsweise über die Sitzbelegung, den Öffnungszustand der Türen oder die Fahrzeuggeschwindigkeit bereitstellen. Insbesondere für die Erkennung der Sitzbelegung können die bereits vorhandenen, an sich teuren, für den Benutzer idealerweise nie in Aktion tretenden Sensoren der Airbagsteuerung verwendet werden, so dass diese Sensoren und ihre Auswerteelektronik mit minimalem Aufwand eine zusätzliche Komfortfunktion mit deutlicher Nutzungssteigerung erhalten.

Die Steuerung steuert aufgrund der von den Sensoren gelieferten Informationen vorzugsweise das Verfahren des Sitzteils mittels eines Längseinstellers oder ein Schwenken des Sitzteils, gegebenenfalls auch einen Höheneinsteller. Zusätzlich steuert die Steuerung vorzugsweise noch ein Schwenken der Lehne. Bei dem Regelfall eines motorisch einstellbaren Fahrzeugsitzes bedeutet dies, daß die verschiedenen Stellmotoren, welche die Einstellerantriebe bilden, von der Steuerung Signale erhalten, bis ein Endanschlag erreicht ist oder bis die Kraft auf die Lehne nachläßt. Die erfindungsgemäße Lösung ist aber auch bei einem manuell einstellbaren Fahrzeugsitz anwendbar, wenn die Kraft auf die Lehne indirekt ein Entriegeln der entsprechenden Einsteller bewirkt, wobei aus Sicherheitsgründen das Einbeziehen der Abfragemittel bevorzugt ist.

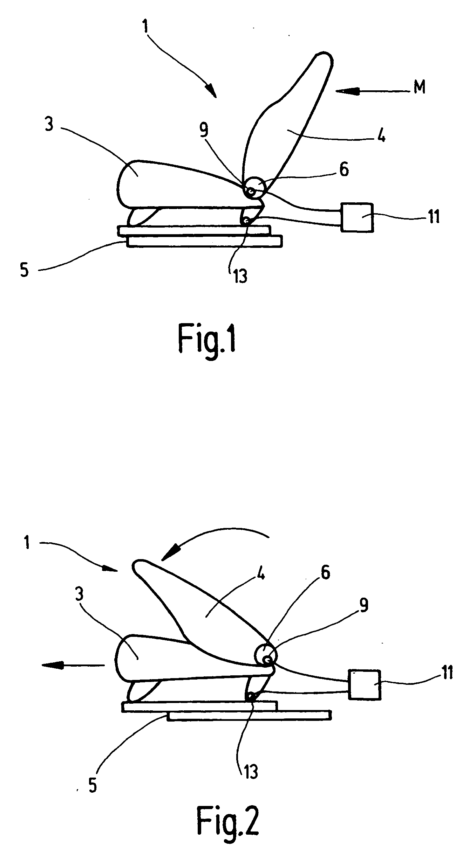

Im folgenden ist die Erfindung anhand eines in der Zeichnung dargestellten Ausführungsbeispiels näher erläutert. Es zeigen
- Fig. 1: eine schematisches Blockschaltbild des Ausführungsbeispiels in der Sitzstellung, und
- Fig. 2: eine entsprechende Darstellung beim Freischwenken.

Ein Fahrzeugsitz 1 ist als Vordersitz eines zweitürigen Kraftfahrzeuges ausgebildet, wobei die Anordnung des Fahrzeugsitzes 1 im Kraftfahrzeug und dessen normale Fahrtrichtung die nachfolgenden Richtungsangaben definieren. Der Fahrzeugsitz 1 weist ein Sitzteil 3 und eine Lehne 4 auf. Das Sitzteil 3 ist mittels eines Längseinstellers 5, der auf jeder Fahrzeugsitzseite ein Paar von Sitzschienen aufweist, in seiner Sitzlängsposition einstellbar. Die Lehne 4 ist mittels je eines Beschlags 6 auf jeder Fahrzeugsitzseite am Sitzteil 3 angebracht und relativ zu diesem in ihrer Neigung einstellbar und freischwenkbar.

Beim Freischwenken wird - ausgehend von einer Fahr- oder Sitzposition des Fahrzeugsitzes 1 - die Lehne 4 vorgeklappt und gleichzeitig der Längseinsteller 5 betätigt, so daß das Sitzteil 3 und damit der gesamte Fahrzeugsitz 1 sich nach vorne bewegt. Der Zugang zu der Rücksitzanlage ist dadurch erleichtert ist. Das Freischwenken wird erfindungsgemäß ausgelöst durch seitliches Angreifen der Lehne 4 und Ausübung eines Drucks nach vorne, d.h. durch eine Kraft M auf die Lehne 4. Die Lehne 4 wirkt in ihrer Gesamtheit als Auslösemittel mit einem großen Hebelarm. Die Detektion erfolgt mittels eines Sensors 9 innerhalb des Beschlags 6 oder in der Umgebung desselben.

Der Sensor 9 gibt sein Signal auf eine mit ihm verbundene Steuerung 11, welche das Vorfahren des Sitzteils 3 mittels des Längseinstellers und das Vorklappen der Lehne 4 mittels der Beschläge 6 steuert. In einer motorischen Ausführung, d.h. mit motorisch angetriebenen Längseinsteller 5 und motorisch angetriebenen Beschlägen 6, erfolgt das gesamte Freischwenken vorzugsweise automatisch, sobald die Auslösung durch die Lehne 4 stattgefunden hat. Die Vorwärtsbewegungen werden beendet, wenn eine Gegenkraft aufgebaut wird, d.h. wenn der Längseinsteller 5 an seinen vorderen Endanschlag gelangt und/oder die Lehne 4 unter Aufbau einer Polsterpressung am Sitzteil 3 anliegt. Es ist aber auch denkbar, daß die Kraft M auf die Lehne 4 bis zum Erreichen der vorderen Position aufrecht erhalten werden muß, so daß beim Loslassen der Lehne 4 das Freischwenken gestoppt wird. Diese Variante kann sowohl für einen motorisch angetriebenen Fahrzeugsitz 1 als auch für eine teilweise manuell angetriebene Abwandlung eingesetzt werden, bei welcher durch die Kraft auf die Lehne 4 nur ein Entriegeln von Längseinsteller 5 und Beschlag 6 erfolgt und der Benutzer durch seine Kraft selber die Vorwärtsbewegungen durchführen muß.

Die Rückkehr erfolgt durch Ausübung einer Kraft auf die Lehne 4 nach hinten. Um Mißbrauchsfälle auszuschließen, sind an die Steuerung 11 noch an sich bereits vorhandene Abfragemittel 13 angeschlossen, welche weitere Informationen liefern. Es kommen hierfür beispielsweise der für die Airbagansteuerung vorgesehene Sitzbelegungs-Erkennungssensor oder der Türöffnungszustands-Erkennungssensor in Frage, welche bei einem positiven Signal ein Freischwenken verhindern bzw. ein Freischwenken erst zulassen. Insbesondere der Sitzbelegungs-Erkennungssensor ist vorteilhaft, um auch einen Crashfall von einem Auslösen des Freischwenkens zu unterscheiden. Vorzugsweise ist die Steuerung 11 in die Crashsensierungs- und Airbagsteuerung integriert oder anderweitig mit dieser gekoppelt.

In einer abgewandelten Ausführungsform, beispielsweise im Falle eines vier- oder fünftürigen Kraftfahrzeuges, ist es möglich, die normale Sitzlängseinstellung mittels der beschriebenen Verwendung der Lehne 4 als Auslösemittel vorzunehmen, d.h. den Längseinsteller 5 für das Sitzteil 3 durch eine Kraft M auf die Lehne 4 zu betätigen. Als Sensor 9 dient beispielsweise der Sitzbelegungs-Erkennungssensor, der auch Kräfte in Sitzlängsrichtung detektieren kann.

In einer weiteren, abgewandelten Ausführungsform ist keine Längseinstellung vorgesehen, sondern der in einer mittleren oder hinteren Sitzreihe eines Vans vorgesehene, faltbare Fahrzeugsitz kann in eine Packagestellung überführt werden. Durch eine Kraft auf die als Auslösemittel wirkende Lehne klappt diese auf das Sitzteil, welches anschließend in eine aufrechte Position schwenkt. Die Lehne und das Sitzteil können nach dem erfindungsgemäßen Auslösen auch zusammen in eine flache Bodenstellung schwenken, in welcher die gepolsterten Seiten nach unten weisen. Auch hierbei ist es vorteilhaft, Abfragemittel wie den Sitzbelegungs-Erkennungssensor in der Steuerungsvorgang mit einzubeziehen.

### Bezugszeichenliste

- 1: Fahrzeugsitz
- 3: Sitzteil
- 4: Lehne, Auslösemittel
- 5: Längseinsteller
- 6: Beschlag
- 9: Sensor
- 11: Steuerung
- 13: Abfragemittel

## Patentansprüche

1. Fahrzeugsitz, insbesondere Kraftfahrzeugsitz, mit einem längseinstellbaren oder schwenkbaren Sitzteil (3) und einer schwenkbaren Lehne (4), wobei das Betätigen eines Auslösemittels (4) die Bewegung oder Bewegungen des Fahrzeugsitzes auslöst, indem wenigstens ein Sensor (9) eine Kraft (M) auf die Lehne (4) erfasst und ein Signal an eine Steuerung (11) abgibt, **dadurch gekennzeichnet, dass** die Lehne (4) das Auslösemittel bildet und die Kraft (M) auf die Lehne (4) die Bewegung des Sitzteils (3) auslöst, wobei der Sensor (9) in einem Lager oder in der Umgebung eines Lagers zwischen zwei im Kraftfluss zwischen der Lehne (4) und der Fahrzeugstruktur je einschließlich liegenden Bauteilen angeordnet ist.

2. Fahrzeugsitz nach Anspruch 1, **dadurch gekennzeichnet, dass** die Lehne (4) mittels Beschlägen (6) am Sitzteil (3) angebracht ist und dass der Sensor (9) in wenigstens einem Beschlag (6) oder in der Umgebung des Beschlages (6) angeordnet ist.

3. Fahrzeugsitz nach Anspruch 1 oder 2, **dadurch gekennzeichnet, dass** die Steuerung (11) ein Verfahren des Sitzteils (3) mittels eines Längseinstellers (5) oder ein Schwenken des Sitzteils (3) steuert.

4. Fahrzeugsitz nach einem der Ansprüche 1 bis 3, **dadurch gekennzeichnet, dass** Abfragemittel (13) für zusätzliche Informationen an die Steuerung (11) angeschlossen sind.

5. Fahrzeugsitz nach Anspruch 4, **dadurch gekennzeichnet, dass** ein Sitzbelegungs-Erkennungssensor als Abfragemittel (13) vorgesehen ist.

6. Fahrzeugsitz nach Anspruch 4 oder 5, **dadurch gekennzeichnet, dass** die Steuerung (11) in eine Airbagsteuerung integriert oder mit dieser gekoppelt ist.

7. Fahrzeugsitz nach einem der Ansprüche 1 bis 6, **dadurch gekennzeichnet, dass** zusätzlich zur Bewegung des Sitzteils (3) die Lehne (4) schwenkt.

8. Fahrzeugsitz nach einem der Ansprüche 1 bis 7, **dadurch gekennzeichnet, dass** die Bewegungen des Sitzteils (3) und/oder der Lehne (4) motorisch angetrieben erfolgen.

## Claims

1. Vehicle seat, in particular a motor vehicle seat, having a longitudinally adjustable or pivotable seat member (3) and a pivotable backrest (4), the operation of a release means (4) bringing about the movement or movements of the vehicle seat, by at least one sensor (9) detecting a force (M) on the backrest (4) and transmitting a signal to a control system (11), **characterised in that** the backrest (4) forms the release means and the force (M) on the backrest (4) brings about the movement of the seat member (3), the sensor (9) being arranged in a bearing or in the vicinity of a bearing between two components which are each located within the force path between the backrest (4) and the vehicle structure.

2. Vehicle seat according to claim 1, **characterised in that** the backrest (4) is fitted to the seat member (3) by means of fittings (6) and **in that** the sensor (9) is arranged in at least one fitting (6) or in the vicinity of the fitting (6).

3. Vehicle seat according to claim 1 or 2, **characterised in that** the control system (11) controls a displacement of the seat member (3) by means of a longitudinal adjuster (5), or a pivoting of the seat member (3).

4. Vehicle seat according to any one of claims 1 to 3, **characterised in that** interrogation means (13) for additional information are connected to the control system (11).

5. Vehicle seat according to claim 4, **characterised in that** a seat occupation detection sensor is provided as interrogation means (13).

6. Vehicle seat according to claim 4 or 5, **characterised in that** the control system (11) is integrated in an airbag control system or is coupled thereto.

7. Vehicle seat according to any one of claims 1 to 6, **characterised in that** the backrest (4) pivots in addition to the movement of the seat member (3).

8. Vehicle seat according to any one of claims 1 to 7, **characterised in that** the movements of the seat member (3) and/or the backrest (4) are driven in a motorised manner.

## Revendications

1. Siège de véhicule, en particulier siège de véhicule automobile, présentant une partie de siège (3) réglable en longueur ou pivotante et un dossier pivotant (4), la manoeuvre d'un moyen de déclenchement (4) déclenchant le mouvement ou les mouvements du siège de véhicule, dans lequel au moins un détecteur (9) détecte une force (M) sur le dossier (4) et délivre un signal sur une commande (11), **caractérisé par le fait que** le dossier forme le moyen de déclenchement et la force (M) sur le dossier (4) déclenche le mouvement de la partie de siège (3), le détecteur (9) étant disposé dans un palier ou aux environs d'un palier entre deux parties de structure se trouvant chacune inclusivement dans le flux de force entre le dossier (4) et la structure du véhicule.

2. Siège de véhicule selon la revendication 1, **caractérisé par le fait que** le dossier (9) est monté sur la partie de siège (3) au moyen d'armatures (6) et **par le fait que** le détecteur (9) est disposé dans au moins une armature (6) ou aux environs de l'armature (6).

3. Siège de véhicule selon l'une des revendications 1 ou 2, **caractérisé par le fait que** la commande (11) commande un déplacement du siège de véhicule (3) au moyen d'un dispositif (5) de réglage en longueur ou d'un pivotement de la partie de siège (3).

4. Siège de véhicule selon l'une des revendications 1 à 3, **caractérisé par le fait que** des moyens d'interrogation (13) pour des informations supplémentaires sont branchés sur la commande (11).

5. Siège de véhicule selon la revendication 4, **caractérisé par le fait qu'**un détecteur de reconnaissance d'occupation de siège est prévu comme moyen d'interrogation (13).

6. Siège de véhicule selon l'une des revendications 4 ou 5, **caractérisé par le fait que** la commande (11) est intégrée dans une commande d'airbag ou couplée avec celle-ci.

7. Siège de véhicule selon l'une des revendications 1 à 6, **caractérisé par le fait que** 1e dossier (4) bascule en plus du mouvement de la partie de siège (3).

8. Siège de véhicule selon l'une des revendications 1 à 7, **caractérisé par le fait que** les mouvements de la partie de siège (3) et/ou du dossier (4) ont lieu de façon commandée par moteur.
